# EUROPEAN PATENT SPECIFICATION

(11) **EP 1 140 533 B1**
(45) Date of publication and mention of the grant of the patent: **22.01.2003**
(21) Application number: 99956326.5
(22) Date of filing: 15.11.1999
(51) Int. Cl.: B60H 1/32

(54) **AIR-CONDITIONING SYSTEM FOR MOTOR VEHICLES, WITH TWO SEPARATE AND INDEPENDENT REFRIGERATING CIRCUITS, HAVING HEAT EXCHANGERS ON THE SAME AIR FLOW LINE**
KRAFTFAHRZEUGKLIMAANLAGE MIT GETRENNTEN, UNABHÄNGIGEN KÄLTEKREISLÄUFEN, MIT WÄRMETAUSCHER IN EINER GEMEINSAMEN LUFTSTRÖMUNG
SYSTEME DE CLIMATISATION POUR VEHICULES A MOTEUR, AVEC DEUX CIRCUITS DE REFRIGERANT SEPARES ET INDEPENDANTS ET DES ECHANGEURS THERMIQUES SUR LA MEME CONDUITE DE DEBIT D'AIR

(30) Priority: 16.11.1998 IT AT980009
(43) Date of publication of application: 10.10.2001
(73) Proprietor: Autoclima S.P.A., Fraz. Borgaretto, 10040 Beinasco (IT)
(72) Inventor: MOFFA, Giorgio, Fraz. Borgaretto, I-10040 Beinasco (IT)
(74) Representative: Adorno, Silvano
(86) International application number: IT9900367
(87) International publication number: WO00029231

(56) References cited:
- US-A- 3 885 398
- US-A- 4 105 064
- US-A- 5 307 645
- US-A- 5 333 678

## Description

According to the preamble of claim 1, the present invention relates to an air-conditioning system for motor vehicles or the like, namely of a closed volume transported by a motor vehicle, in particular formed of two separate and independent refrigerating circuits which can be used separately for operating either when the motor vehicle is running or is stopped, as known by US-A-5 333 678.

It is known that the conditioning systems for motor vehicles are essentially formed of a condenser provided with one or more electro-fans, an evaporator also having one or more electro-fans and a compressor which can receive mechanical power from the engine itself of the motor vehicle or either from a supplemental combustion engine or an electric motor being fed by a generator mounted on board or by the mains current; obviously in this latter case the compressor can operate only when the vehicle is stationary and connected to the power mains.

In case of two compressors being present, these are inserted in the same refrigerating circuit and use the same cooling fluid. It is true that theoretically two separate and independent circuits could be found, as disclosed in the US-A-5.307.645, but till now the relevant compressors were both driven by electrical motors for the purpose of macking up a conditioning system with two stages of refrigerating capacity, to be used during the stop.

In case it is desired to have the system operating when the motor vehicle is both in movement and stopped with the engine off, it is possible to find two compressors operating in the same refrigerating circuit and using the same cooling fluid: the first of them receives mechanical power from the motor vehicle engine and is used during the vehicle running, while the second receives mechanical power from an electrical motor being in turn fed by the mains current and is instead used during the stop.

Although already in the US-A-3.885.398, of 1975, a compressor is disclosed to be coupled with an electrical motor and another compressor is driven by the vehicle engine, being both inserted in the same refrigerating circuit, it is very difficult to find out compressors coupled with electrical motors which can be directly fed by the mains current and are called "sealed" or "semi-sealed", being also compatible with the same cooling fluid and the same lubricant of the compressors which are designed to receive mechanical power from a combustion engine, these being instead called of the "open" type. Furthermore the components of the circuit are in common and consequently, since the "open" compressors have variable capacity and speed, different from those of the sealed compressor, it is impossible to obtain the best efficiency with either of them. Therefore for these reasons also the second compressor is often of the "open" type, in order to be compatible with the same cooling and lubricating means of the first compressor, and receives mechanical power from an electrical motor fed by the mains current.

However such a solution is limiting the possibilities of choosing the compressors and may involve drawbacks such as excessive noise which is typical for open compressors - during the functioning with the vehicle parked, the system being more complicated for the need of an additional electrical motor and relevant transmission system of the drive to the compressor, as well as due to lubrication problems: in fact the oil of the compressors is partially swept by the cooling fluid along the refrigerating circuit and, since there are portions of the circuit itself which are excluded during the operation, either when the vehicle is running or stopped, it can happen that an oil fraction remains without flowing in the excluded portion of the circuit instead of returning to the compressor.

It is therefore an object of the present invention to provide an air- conditioning system for a motor vehicle with two separate and independent refrigerating circuits having heat exchangers on the same air flow line and can be used both in case of running or of stop, such as not to show the above-mentioned drawbacks but a practical and advantageous solution under the points of view of construction and utilization.

This object is achieved, according to the invention, with an air conditioning system for motor vehicles or the like, characterized by providing two separate and independent refrigerating circuits, while maintaining the heat exchangers on the same air flow line, with one of the two circuits having its compressor that receives mechanical power from the vehicle engine and thereby can be used when the motor vehicle itself is running, and the other circuit has the relevant compressor that receives mechanical power from an electrical motor which in turn receives power from the mains current and is instead usable during the stop, with the vehicle being parked.

These and other features of the present invention and the relevant advantages deriving therefrom will be clear from the following detailed description of some preferred embodiments of the invention itself, shown only by a non-limiting example with reference to the annexed drawings, in which:
Figure 1 schematically shows a conditioning system according to the invention; and
Figure 2 also schematically shows an embodiment of the conditioning system of the invention, particularly suitable for the air conditioning at the inside of a motor caravan.

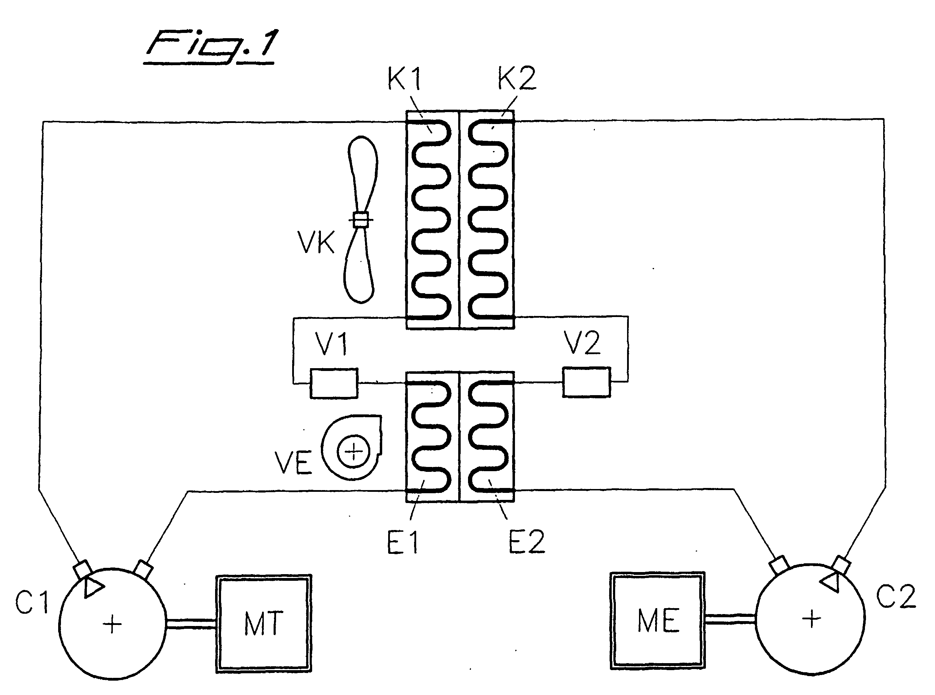

With reference to the drawings and firstly to figure 1, a system has been provided comprising two refrigerating circuits having compressors C1 and C2, condensers K1 and K2 with relevant fans VK, lamination devices V1 and V2, and evaporators E1 and E2 with relevant fans VE. The circuits are schematically represented in a simplifield manner, whereby along the circuits there can be usually auxiliary components such as electrovalves for intercepting the cooling fluids, water traps downstream of the condenser or upstream of the compressor, humidity indicators and others. The compressors C1 and C2 can use different cooling and lubricating means. Compressor C1 is driven into rotation by the combustion engine of the motor vehicle MT, while C2 is driven by an electrical motor ME. During the operation with the compressor C1 or C2 the temperatures of the condensation and evaporation of the cooling means can be different as well as the temperatures of the volume to be conditioned.

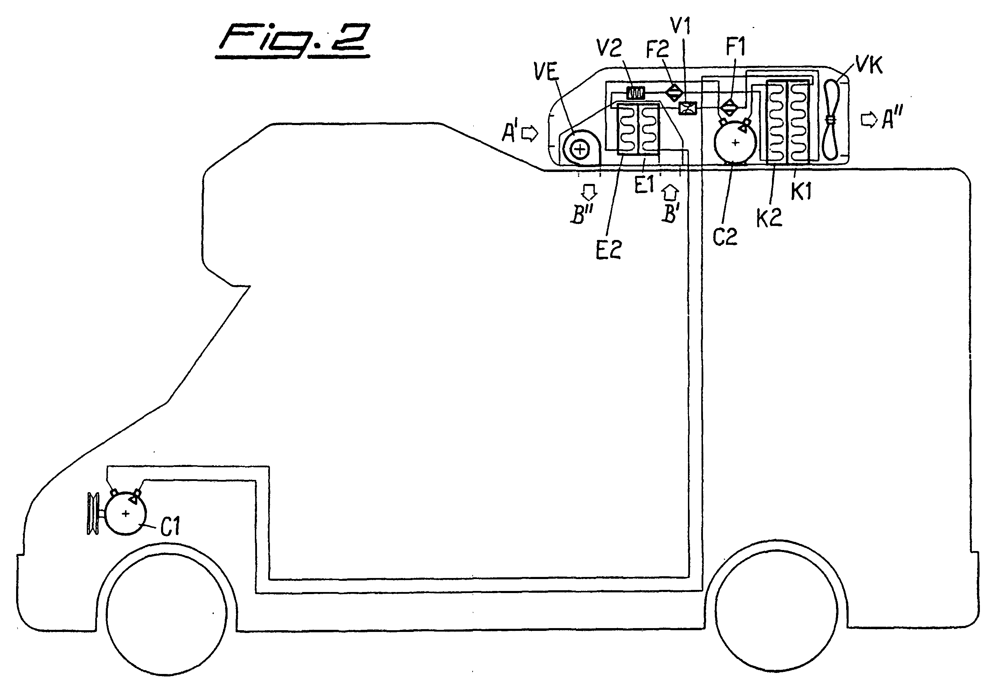

The embodiment of figure 2 schematically shows a system according to the invention used for the air conditioning of a motor caravan wherein the compressor named C1 is of the open type and uses a suitable cooling fluid, e.g. R134a, while the compressor named C2 is of the sealed type and uses another cooling fluid, e.g. R22. The compressor C2 is placed within a housing mounted on the vehicle roof wich contains also the heat exchangers K1, K2, E1, E2 and the propeller fans VK and centrifugal fans VE; there are also provided a dehydrating filter F1 having also the function of water trap, a filter F2, a lamination device V1, formed as a thermostatic valve and a second lamination device V2 formed of a tube having a small cross-section. In this case the condensers are so arranged to form two refrigerating lines at the inside of a single radiating mass and the same applies to the evaporators. The compressor C1 is driven into rotation by the combustion engine of the motor vehicle by means of a belt drive transmission and the relevant refrigerating circuit can be suitably used for the air conditioning during the vehicle running; the compressor C2 is fed by the mains current and consequently can be used when the vehicle is stopped and connected to the power mains.

The inlet and outlet of the air flows with respect to the condensers K1 and K2 are respectively indicated by arrows A' and A" in fig. 2. Arrows B' and B" are respectively indicating the inlet and outlet of the air flows with respect to the evaporators E1 and E2.

## Claims

1. An air-conditioning system for motor vehicles or the like, being driven by a combustion engine, with two separate and independent refrigerating circuits, having heat exchangers (E1,E2,K1,K2) on the same air flow line and one of the two circuits with a compressor (C1) receiving mechanical power from the motor vehicle engine (MT), to be used when the motor vehicle itself is running, **characterized in that** the compressor (C2) of the other circuit receives mechanical power from an electrical motor (ME) which in turn is fed by the mains current to be used when the motor vehicle is parked during a stop.

2. An air-conditioning system for motor vehicles or the like according to claim 1, **characterized by** the fact of comprising an open-type compressor requiring mechanical power from the combustion engine of the motor vehicle, to which it is connected through mechanical transmission means.

3. An air-conditioning system for motor vehicles or the like according to claims 1 or 2, **characterized by** comprising an open-type compressor driven through mechanical power produced by the electrical motor (ME).

4. An air-conditioning system for motor vehicles or the like according to claims 2 or 3, **characterized by** comprising a compressor of the sealed or semi-sealed type driven either by electric power fed from the mains current or by means of an electric generator.

5. An air-conditioning system for motor vehicles or the like according to one or more of the preceding claims, **characterized by** comprising heat exchangers, condensers or evaporators or both, respectively made with a single radiating mass at the inside of which there are provided respective sections of the two separate refrigerating circuits.

6. An air-conditioning system for motor vehicles or the like according to one or more of the claims 1-4, **characterized by** comprising heat exchangers, either condensers or evaporators or both, respectively consisting, each relevant unit, of two distinct radiating masses, each of them corresponding to the respective section of the refrigerating circuit.

7. An air-conditioning system for motor vehicles or the like according to any one of the preceding claims, **characterized by** the fact of using two different cooling fluids in the two refrigerating circuits.

8. An air-conditioning system for motor vehicles or the like according to any one of claims 1-6, **characterized by** the fact of using the same cooling fluid in both the refrigerating circuits.

9. An air-conditioning system for motor vehicles or the like according to one or more of the preceding claims, **characterized by** the fact that one or both of the refrigerating circuits are capable to be used for a heat pump operation, therefore for heating the motor vehicle interior.

10. An air-conditioning system for motor vehicles or the like according to claims 2,4 and 5, in particular for the air-conditioning of motor caravans or the like, wherein a first compressor (C1) is of the open type and uses a first cooling fluid, while the compressor (C2) is of the sealed type and uses a second different cooling fluid, said second compressor (C2) being located at the inside of a housing mounted on the vehicle roof that contains also heat exchangers (K1, K2, E1, E2) as well as propeller fans (VK) and centrifugal fans (VE), also comprising a dehydrating filter (F1), a second filter (F2), laminating devices (V1, V2) with condensers (K1, K2) and evaporators (E1, E2), whereby two refrigerating lines are formed within a single radiating mass, said compressor (C1) being driven to rotation by the combustion engine of the vehicle by means of a belt drive, the relevant circuit including said compressor (C1) being adapted to be used for the air conditioning when the said vehicle is running, while the second compressor (C2) is fed by the mains current, thus being used when the vehicle is stationary and connected to said mains.

## Patentansprüche

1. Klimatisierungssystem für Motorfahrzeuge oder ähnliches, die durch eine Brennkraftmaschine angetrieben werden, mit zwei getrennten und unabhängigen Gefrier-Kreisläufen, die Wärmeaustauscher (E1, E2, K1, K2) an der gleichen Luftströmungsleitung aufweisen, und wobei einer der zwei Kreisläufe einen Kompressor (C1) enthält, der mechanisch Energie von dem Motor (MT) des Motorfahrzeugs empfängt, die verwendet wird, wenn das Motorfahrzeug selbst fährt,
**dadurch gekennzeichnet, daß**
der Kompressor (C2) des anderen Kreislaufes mechanische Energie von einem Elektromotor (ME) empfängt, der seinerseits durch das Stromnetz gespeist wird und verwendet wird, wenn das Motorfahrzeug während eines Halts geparkt wird.

2. Klimatisierungssystem für Motorfahrzeuge oder ähnliches gemäß Anspruch 1,
**dadurch gekennzeichnet, daß**
es einen Kompressor vom offenen Typ enthält, der mechanische Energie von der Brennkraftmaschine des Motorfahrzeugs erfordert, an die er über eine mechanische Getriebeeinrichtung angeschlossen ist.

3. Klimatisierungssystem für Motorfahrzeuge oder ähnliches nach Anspruch 1 oder 2,
**dadurch gekennzeichnet, daß**
es einen Kompressor vom offenen Typ aufweist, der durch die mechanische Energie angetrieben wird, die durch den Elektromotor (ME) erzeugt wird.

4. Klimatisierungssystem für Motorfahrzeuge oder ähnliches gemäß Anspruch 2 oder 3,
**dadurch gekennzeichnet, daß**
es einen Kompressor vom abgedichteten oder halb abgedichteten Typ enthält, der durch die elektrische Energie angetrieben wird, die von dem Stromnetz zugeführt wird oder mit Hilfe eines Elektrogenerators zugeführt wird.

5. Klimatisierungssystem für Motorfahrzeuge oder ähnliches gemäß einem oder mehreren der vorhergehenden Ansprüche,
**dadurch gekennzeichnet, daß**
es Wärmeaustauscher, Kondensoren oder Verdampfer oder beide enthält, die jeweils mit einer einzelnen strahlenden Masse im Inneren ausgestattet sind, in welchem Inneren jeweilige Abschnitte der zwei getrennten Gefrier-Kreisläufe vorgesehen sind.

6. Klimatisierungssystem für Motorfahrzeuge oder ähnliches gemäß einem oder mehreren der Ansprüche 1 bis 4,
**dadurch gekennzeichnet, daß**
es Wärmeaustauscher, entweder Kondensoren oder Verdampfer oder beide enthält, die jeweils aus einer relevante Einheit aus zwei unterschiedlichen strahlenden Massen bestehen, von denen jede dem jeweiligen Abschnitt des Gefrierkreislaufes entspricht.

7. Klimatisierungssystem für Motorfahrzeuge oder ähnliches nach einem der vorhergehenden Ansprüche,
**dadurch gekennzeichnet, daß**
zwei verschiedene Kühlmedien in den zwei Gefrierkreisläufen verwendet werden.

8. Klimatisierungssystem für Motorfahrzeuge oder ähnliches gemäß einem der Ansprüche 1 bis 6,
**dadurch gekennzeichnet, daß**
das gleiche Kühlmedium in beiden Gefrierkreisläufen verwendet wird.

9. Klimatisierungssystem für Motorfahrzeuge oder ähnliches gemäß einem oder mehreren der vorhergehenden Ansprüche,
**dadurch gekennzeichnet, daß**
einer oder beide der Gefrierkreisläufe dafür ausgebildet ist bzw. sind, um einen Wärmepump-Betrieb durchzuführen, um das Innere des Motorfahrzeugs zu erwärmen.

10. Klimatisierungssystem für Motorfahrzeuge oder ähnliches gemäß Anspruch 2, 4 und 5, insbesondere für die Klimatisierung von Motor-Caravan-Fahrzeugen oder ähnlichem, bei dem ein erster Kompressor (C1) von einem offenen Typ ist und ein erstes Kühlmedium verwendet, während der an der Kompressor (C2) von einem abgedichteten Typ ist und ein zweites unterschiedliches Kühlmedium verwendet, wobei der zweite Kompressor (C2) an der Innenseite eines Gehäuses gelegen ist, welches an dem Fahrzeugdach montiert ist und welches auch Wärmeaustauscher (K1, K2, E1, E2) als auch Propellerlüfter (VK) und Zentrifugallüfter (VE) enthält, ferner auch ein Dehydrier-Filter (F1) ein zweites Filter (F2), Laminiervorrichtungen (V1, V2) mit Kondensoren (K1, K2) und Verdampfern (E1, E2) enthält, wobei zwei Gefrierleitungen innerhalb einer einzelnen strahlenden Masse ausgebildet sind, der Kompressor (C1) durch die Brennkraftmaschine des Fahrzeugs mit Hilfe eines Riemenantriebs in Drehung versetzt wird, der relevante Kreislauf, der den Kompressor (C1) enthält, dafür ausgebildet ist, um für eine Klimatisierung verwendet zu werden, wenn das Fahrzeug fährt, während der zweite Kompressor (C2) durch das Stromnetz gespeist wird und somit verwendet wird, wenn das Fahrzeug stationär ist und an das Stromversorgungsnetz angeschlossen ist.

## Revendications

1. Système de climatisation pour véhicules à moteur ou analogues, entraîné par un moteur à combustion, muni de deux circuits de réfrigération séparés et indépendants, ayant des échangeurs thermiques (E1, E2, K1, K2) sur la même ligne d'écoulement d'air, et un premier des deux circuits étant muni d'un compresseur (C1) recevant de la puissance mécanique à partir du moteur de véhicule à moteur (MT), devant être utilisé lorsque le véhicule à moteur lui-même se déplace, **caractérisé en ce que** le compresseur (C2) de l'autre circuit reçoit de la puissance mécanique à partir d'un moteur électrique (ME) qui est à son tour alimenté par le courant de réseau devant être utilisé lorsque le véhicule à moteur est mis en stationnement pendant un arrêt.

2. Système de climatisation pour véhicules à moteur ou analogues selon la revendication 1, **caractérisé en ce qu'**il comporte un compresseur de type ouvert nécessitant de la puissance mécanique à partir du moteur à combustion du véhicule à moteur, auquel il est connecté par l'intermédiaire de moyens de transmission mécaniques.

3. Système de climatisation pour véhicules à moteur ou analogues selon la revendication 1 ou 2, **caractérisé en ce qu'**il comporte un compresseur de type ouvert entraîné par l'intermédiaire de puissance mécanique produite par le moteur électrique (ME).

4. Système de climatisation pour véhicules à moteur ou analogues selon la revendication 2 ou 3, **caractérisé en ce qu'**il comporte un compresseur de type fermé de manière hermétique ou semi-fermé de manière hermétique entraîné par la puissance électrique alimentée à partir du courant de réseau, ou par l'intermédiaire d'un générateur électrique.

5. Système de climatisation pour véhicules à moteur ou analogues selon l'une quelconque des revendications précédentes, **caractérisé en ce qu'**il compose des échangeurs thermiques, des condenseurs ou des évaporateurs ou les deux, respectivement constitués d'une masse rayonnante unique à l'intérieur de laquelle sont agencés des tronçons respectifs des deux circuits de réfrigération séparés.

6. Système de climatisation pour véhicules à moteur ou analogues selon l'une quelconque des revendications 1 à 4, **caractérisé en ce qu'**il comporte des échangeurs thermiques, des condenseurs ou des évaporateurs ou les deux, constitués respectivement, dans chaque unité concernée, de deux masses rayonnantes distinctes, chacune d'entre elles correspondant au tronçon respectif du circuit de réfrigération.

7. Système de climatisation pour véhicules à moteur ou analogues selon l'une quelconque des revendications précédentes, **caractérisé par** l'utilisation de deux fluides de refroidissement différents dans les deux circuits de réfrigération.

8. Système de climatisation pour véhicules à moteur ou analogues selon l'une quelconque des revendications 1 à 6, **caractérisé par** l'utilisation du même fluide de refroidissement dans les deux circuits de réfrigération.

9. Système de climatisation pour véhicules à moteur ou analogues selon l'une quelconque des revendications précédentes, **caractérisé en ce qu'**un ou les deux circuits de réfrigération peuvent être utilisés pour un fonctionnement de pompe à chaleur, par conséquent pour chauffer l'intérieur du véhicule à moteur.

10. Système de climatisation pour véhicules à moteur ou analogues selon l'une quelconque des revendications 2, 4 et 5, en particulier pour la climatisation de caravanes à moteur ou analogues, dans lequel un premier compresseur (C1) est du type ouvert et utilise un premier fluide de refroidissement, tandis que le compresseur (C2) est du type fermé de manière hermétique et utilise un second fluide de refroidissement différent, ledit second compresseur (C2) étant positionné à l'intérieur d'un boîtier monté sur le toit du véhicule qui contient également des échangeurs thermiques (K1, K2, E1, E2) de même que des ventilateurs à hélice (VK) et des ventilateurs centrifuges (VE), et comportant également un filtre de déshydratation (F1), un second filtre (F2), des dispositifs de laminage (V1, V2) munis de condenseurs (K1, K2) et d'évaporateurs (E1, E2), de sorte que deux lignes de réfrigération sont formées dans une masse rayonnante unique, ledit compresseur (C1) étant entraîné en rotation par le moteur à combustion du véhicule par l'intermédiaire d'une courroie d'entraînement, le circuit concerné comportant ledit compresseur (C1) étant adapté pour être utilisé pour la climatisation lorsque le véhicule se déplace, tandis que le second compresseur (C2) est alimenté par le courant de réseau, étant ainsi utilisé lorsque le véhicule est stationnaire et connecté audit courant de réseau.
